**Europäisches Patentamt**

**European Patent Office**

**Office européen des brevets**

(11) Veröffentlichungsnummer : **0 358 843 B1**

(12) **EUROPÄISCHE PATENTSCHRIFT**

(45) Veröffentlichungstag der Patentschrift :
15.07.92 Patentblatt 92/29

(21) Anmeldenummer : **89106959.3**

(22) Anmeldetag : **19.04.89**

(51) Int. Cl.⁵ : **F24D 19/10, F04D 13/12**

(54) **Pumpen für eine Warmwasserheizungsanlage.**

(30) Priorität : **23.08.88 DE 3828578**

(43) Veröffentlichungstag der Anmeldung :
**21.03.90 Patentblatt 90/12**

(45) Bekanntmachung des Hinweises auf die
Patenterteilung :
**15.07.92 Patentblatt 92/29**

(84) Benannte Vertragsstaaten :
**AT BE CH DE ES FR GB GR IT LI LU NL SE**

(56) Entgegenhaltungen :
**CH-A- 310 188**
**DE-A- 1 653 743**
**DE-A- 2 607 495**

(73) Patentinhaber : **WILO-Werk GmbH & Co.**
**Pumpen- und Apparatebau**
**Nortkirchenstrasse 100**
**W-4600 Dortmund 30 (DE)**

(72) Erfinder : **Naasner, Günter**
**Oberschlesienstrasse 29**
**W-4600 Dortmund 1 (DE)**

(74) Vertreter : **Patentanwaltsbüro Cohausz &**
**Florack**
**Schumannstrasse 97**
**W-4000 Düsseldorf 1 (DE)**

## Beschreibung

Die Erfindung betrifft eine Vorrichtung für eine Warmwasserheizungsanlage mit einer Wärmequelle, insbesondere einem Kessel oder einem Gasheizgeräte, durch die eine Flüssigkeit, insbesondere Wasser erwärmt und über einen eine Pumpe aufweisenden Heizkreis den Wärmeverbrauchern, insbesondere Heizkörpern zugeführt wird und mit einem das Brauchwasser erwärmenden Wärmetauscher, dessen Zuleitung vom Heizungsvorlauf abzweigt und dessen Rücklauf in den Rücklauf der Wärmequelle mündet, wobei in der den Brauchwasser-Wärmetauscher aufweisenden Warmwasserkreis eine zweite Pumpe angeordnet ist, und daß zur Steuerung von Heizkreis und Warmwasserkreis die Pumpen elektrisch schaltbar, insbesondere steuerbar sind.

Insbesondere für kleinere Heizungsanlagen, die z.B. ein Wandgasheizgerät verwenden, ist es bekannt, daß Wasser vom Heizgerät bzw. vom Kessel über eine Umwälzpumpe zu den Heizkörpern zu bringen und danach zum Heizgerät oder zum Kessel zurückzuführen. Zwischen der Umwälzpumpe und dem Heizungsvorlauf befindet sich ein Drei-Wege-Umschaltventil, über das ein Brauchwasser-Wärmetauscher mit Warmwasser versorgt werden kann um warmes Brauchwasser zu erzeugen. Der Rücklauf vom Wärmetauscher ist mit dem Rücklauf des Heizkreises verbunden

Ein solches Drei-Wege-Umschaltventil kann zu Funktionsproblemen führen, insbesondere aufgrund der mechanischen Teile und des Stellmotors. Auch erzeugt dieses Umschaltventil zusätzliche Kosten.

Aus der DE-A- 2 607 495 ist es bekannt, neben der Pumpe im Heizkreis eine zweite Pumpe anzuordnen, die einen Wärmetauscher eines Gebrauchswasserbereiters Warmwasser zuführtz. Ferner ist es aus der DE-A- 1 653 743 bekannt, zwei Pumpen dicht nebeneinander zu setzen und beide Pumpenauslässe an ein Wechselventil anzuschließen. Diese Konstruktion führt zu großen Außenabmessungen, zu einem erheblichen Herstellungs-, -, Montage- und Anschlußaufwand.

Aufgabe der Erfindung ist es eine Vorrichtung der eingangs genannten Art so zu verbessern, daß die Konstruktion vereinfacht, die Kosten verringert und die Funktionstüchtigkeit erhöht werden.

Diese Aufgabe wird erfindungsgemäß dadurch gelöst,
– daß jedes Pumpengehäuse auf der dem Pumpenmotor abgewandten Seite eine Flachseite aufweist, die einen insbesondere zum Laufrad koaxialen Einlaß und einen dazu seitlich versetzten Auslaß hat, und daß die Pumpen auf einer Seite einer ebenen Platte, insbesondere eines Bleches befestigt sind, und daß die Platte mit den Ein- und Auslässen übereinstimmende Öffnungen besitzt,
– daß die zu den Pumpeneinlässen führenden Platteneinlaßöffnungen Anschlußstutzen auf der den Pumpen abgewandten Plattenseite bilden oder zeitlich überlappend gefahren werden,
tragen, und
– daß beide Pumpenauslässe und/oder zu den Pumpenauslässen führenden Plattenauslaßöffnungen auf der den Pumpen abgewandten Plattenseite von dem Gehäuse eines Wechselventils überdeckt sind, dessen Ventilkammer auf der den Pumpen zugewandten Seite eine Öffnung mit ebenen Rand bildet, die an der Platte dicht anliegt und beide Pumpenauslässe umgibt.

Eine solche Vorrichtung oder Anlage benötigt kein Umschaltventil und damit keinen Stellmotor, sondern allein durch ein wechselweises Einschalten der Pumpen werden alle Funktionen ermöglicht. Es ist damit nur ein elektrischer Schalter erforderlich, um abwechselnd zu heizen oder Brauchwasser zu erzeugen.

Ferner können zwei unterschiedliche Pumpen eingesetzt werden, die an die Bedürfnisse des Brauchwasser- bzw. Warmwasserkreises und des Heizkreises angepaßt sind. Auch läßt eine solche Konstruktion zu, daß die beiden Pumpen unterschiedlich geregelt werden, d.h. sie werden nicht nur abwechselnd ein- und ausgeschaltet, sondern sie können mit unterschiedlichen Drehzahlen und Einschaltezeiten als auch zeitlich überlappend gefahren werden.

Besonders vorteilhaft ist es, wenn in Strömungsrichtung hinter beiden Pumpen je ein Rückschlagventil angeordnet ist, die ein Durchströmen der Pumpen entgegen der Pumprichtung bei stillstehender Pumpe verhindern. Eine konstruktiv besonders einfache und platzsparende Bauweise wird dann geschaffen, wenn beide Pumpen dicht nebeneinander angeordnet sind und beide Pumpenauslässe an ein Wechselventil angeschlossen sind, dessen zwei durch das Ventilglied verschließbare Einlässe Öffnungen jeweils mit einem Pumpenauslaß verbunden sind oder diese bilden und dessen Auslaß mit dem Rücklauf der Wärmequelle verbunden ist.

Hierdurch wird eine Konstruktion vorgeschlagen, die bei einfachster Konstruktion und geringen Außenabmessungen eine preiswerte und einfache Herstellung als auch eine leichte Montage und Wartung ermöglicht.

Besonders vorteilhaft ist es, wenn in der länglichen Ventilkammer eine Kugel als Ventilstellglied von dem einen Platten- und/oder Pumpenauslaß zum anderen Platten- und/oder Pumpenauslaß beweglich ist. Hierbei können die Pumpenauslaßränder die Sitze für die Kugel bilden.

Um zu verhindern, daß das kugelförmige Ventilstellglied den Ventilauslaß verschließt, wird vorgeschlagen, daß die Ventilkammer auf der den Pumpen abgewandten Innenseite für die Ventilkugel zueinander parallele Führungsschultern bilden, deren Abstand geringer ist als der Kugeldurchmesser und zwischen denen der Ventilauslaß abzweigt.

Ein Ausführungsbeispiel der erfindungsgemäßen Vorrichtung als auch der erfindungsgemäßen Doppelpumpe mit Wechselventil ist in den Zeichnungen dargestellt und wird im folgenden näher beschrieben. Es zeigen

Figur 1 eine Darstellung des Wärmequellenkreises und des Warmwasserkreises,

Figur 2 eine Seitenansicht der Doppelpumpe mit Wechselventil, teilweise geschnitten und

Figur 3 einen Schnitt A-A in Figur 2.

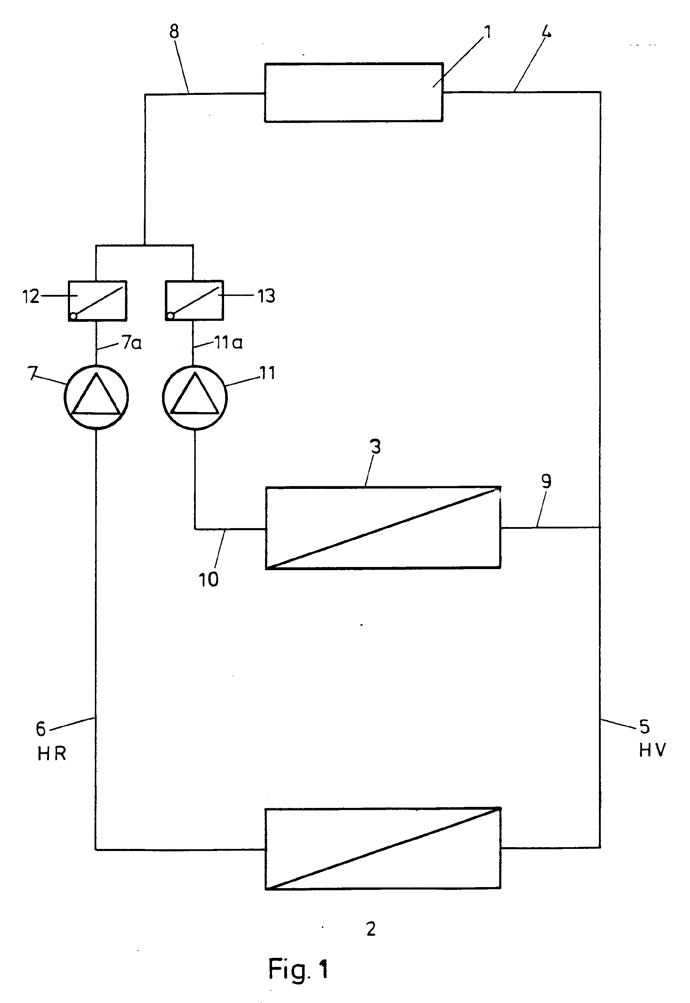

In Figur 1 sind Wärmequelle 1 (z.B. Gasheizgerät oder Kessel), Wärmeverbraucher 2 (insbesondere Heizkreis mit Heizkörpern) und Brauchwasser-Wärmetauscher 3 schematisch als Kästchen dargestellt. Vom Vorlauf 4 der Wärmequelle 1 fließt die die Wärme übertragende Flüssigkeit, insbesondere Wasser zum Heizungsvorlauf 5 und damit zum Wärmeverbraucher 2. Über den Heizungsrücklauf 6 und eine Heizkreispumpe 7 fließt das Wasser über den Rücklauf 8 zur Wärmequelle 1 zurück. Vom (Kessel-)Vorlauf 4 bzw. Heizungsvorlauf 5 zweigt eine Zuleitung 9 zum Brauchwasser-Wärmetauscher 3 ab. Im Rücklauf 10 befindet sich eine zweite Pumpe 11, die auch das Wasser zum Rücklauf 8 und damit zur Wärmequelle 1 fördert. Die Druckstutzen 7a, 11a, beider Pumpen 7, 11 sind über Rückschlagventile bzw. Rückschlagklappen 12, 13 mit dem Rücklauf 8 verbunden.

Die Vorrichtung kann so gefahren werden, daß abwechselnd eine der beiden Pumpen 7, 11 eingeschaltet ist und damit entweder dem Brauchwasser-Wärmetauscher 3 oder dem zweiten Wärmetauscher 2 Warmwasser zugeführt wird. Dies wird über eine elektrische Regelanlage gesteuert, die mindestens einen Wärmefühler besitzt. Vorzugsweise kann diese Regelanlage nach Bedarf auch die Drehzahl der Pumpen steuern. Nach Bedarf können die beiden Pumpen unterschiedliche Größen aufweisen, so daß sie unterschiedliche Leistungen erbringen können. Damit sind unterschiedliche Leistungen auch dann erbringbar, wenn eine Regelung der Pumpendrehzahl nicht erfolgt.

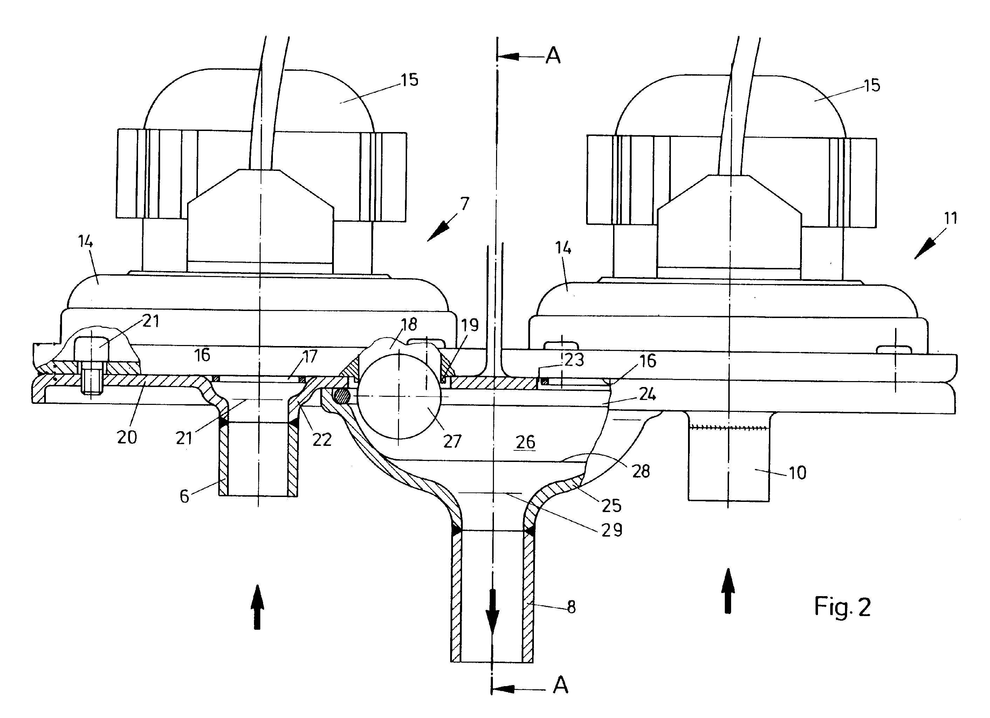

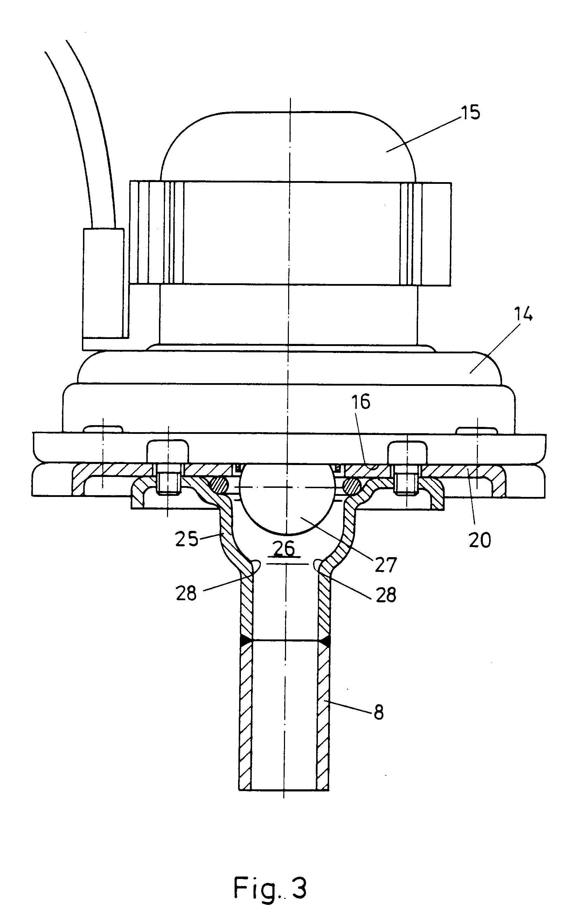

Die beiden Pumpen 7, 11 sind im Ausführungsbeispiel nach den Figuren 2 und 3 mit Pumpengehäusen 14 ausgebildet, die auf der dem Motor abgewandten Seite flach ausgebildet sind. Diese flachen, zur Pumpenlaufachse rechtwinkligen Seitenflächen 16 weisen jeweils eine zum Laufrad koaxiale Einlaßöffnung 17 und eine zur Einlaßöffnung seitlich versetzte Auslaßöffnung 18 auf, die einen Druckstutzen 19 bildet. Beide Pumpen sind dicht nebeneinander mit ihren Seitenflächen 16 auf einer Blech-Platte 20 angeschraubt, wobei die Seitenflächen 16 auf einer Seitenfläche der Platte 20 jeweils fest anliegt und aufgrund Verschraubung 21 ausreichend abgedichtet ist.

Die Blechplatte 20 weist mit den Ein- und Auslässen 17, 18 übereinstimmende Öffnungen auf, wobei die Platteneinlaßöffnung 21 zu einem Stutzen ausgebildet ist, der auf der der Pumpe abgewandten Seite an der Platte vorsteht. An diesem Stutzen 22 ist die Leitung des Heizungsrücklaufs bzw. des Wärmetauscherrücklauf angeschlossen.

Die mit den Pumpenauslässen 18 übereinstimmenden Auslaßöffnungen 23 der Platte 20 sind von der verhältnismäßig großen seitlichen Öffnung 24 eines glockenförmigen Ventilgehäuses 25 überdeckt. Das aus einem Blechteil geformte Gehäuse 25 besitzt einen länglichen Innenraum bzw. eine Ventilkammer 26, die durch die Platte 20 verschlossen ist, da das Gehäuse 25 mit seiner Öffnung 24 an der Seite der Platte 20 angeschraubt ist, die den Pumpen abgewandt ist. In der Kammer 26 ist eine Kugel 27 freibeweglich gelagert, die zwischen den zwei Öffnungen 23 bzw. 18 läuft und abwechselnd die Enden der Druckstutzen 19 verschließt. Hierzu bilden Druckstutzen 19 vorzugsweise Ventilsitze.

Auf der der Platte 20 abgewandten Innenseite der Kammer 26 bildet diese zwei zur Laufrichtung der Kugel 27 parallele Schultern 28, deren Abstand geringer ist als der Durchmesser der Kugel, so daß die Kugel auf diesen Schultern laufen kann, ohne die Auslaßöffnung 29 der Ventilkammer 26 verschließen zu können. Somit ist auf der den Pumpen abgewandten Seitenfläche der ebenen Platte 20 ein Wechselventil 23 bis 29 befestigt, das an die Auslässe beider Pumpen angeschlossen ist und das damit die beiden Rückschlagventile 12, 13 (Figur 1) ersetzt. Die Auslaßöffnung 29 dieses Wechselventils ist mit dem Rücklauf 8 verbunden. Die für beide Pumpen erforderlichen Anschlußteile bestehen somit nur aus zwei Blechteilen, von denen das eine die Platte 20 und das andere das Wechselventil bildet.

**Patentansprüche**

1. Vorrichtung für eine Warmwasserheizungsanlage mit einer Wärmequelle (1), insbesondere einem Kessel oder einem Gasheizgerät, durch die eine Flüssigkeit, insbesondere Wasser erwärmt und über einen eine Pumpe (7) aufweisenden Heizkreis (5, 6) den Wärmeverbrauchern (2), insbesondere Heizkörpern zugeführt wird, und mit einem das Brauchwasser erwärmenden Wärmetauscher (3), dessen Zuleitung (9) vom Heizungsvorlauf (5) abzweigt und dessen Rücklauf (10) in den Rücklauf (8) der Wärmequelle (1) mündet, wobei in der den Brauchwasser-Wärmetauscher (3) aufweisenden Warmwasserkreis eine zweite Pumpe (11) angeordnet ist, und zur Steuerung von Heizkreis (2, 5, 6) und Warmwasserkreis (3, 9, 10) die Pumpen (7, 11) elektrisch schaltbar, insbesondere steuerbar sind, **dadurch gekennzeichnet,**

– daß jedes Pumpengehäuse (14) auf der dem Pumpenmotor abgewandten Seite eine Flachseite (16) aufweist, die einen insbesondere zum Laufrad koaxialen Einlaß (17) und einen dazu seitlich versetzten Auslaß (18) hat, und daß die Pumpen (7, 11) auf einer Seite einer ebenen Platte (20), insbesondere eines Bleches befestigt sind, und daß die Platte (20) mit den Ein- und Auslässen (17, 18) übereinstimmende Öffnungen (21, 23) besitzt,

– daß die zu den Pumpeneinlässen (17) führenden Platteneinlaßöffnungen (21) Anschlußstutzen (22) auf der den Pumpen (7, 11) angewandten Plattenseite bilden oder tragen, und

– daß beide Pumpenauslässe (18) und/oder zu den Pumpenauslässen (18) führenden Plattenauslaßöffnungen (23) auf der den Pumpen (7, 11) abgewandten Plattenseite von dem Gehäuse (25) eines Wechselventils (24-29) überdeckt sind, dessen Ventilkammer (26) auf der den Pumpen (7, 11) zugewandten Seite eine Öffnung (24) mit ebenen Rand bildet, die an der Platte (20) dicht anliegt und beide Pumpenauslässe (18) umgibt.

2. Vorrichtung nach Anspruch 1, **dadurch gekennzeichnet,** daß an der Abzweigstelle der Zuleitung (9) zum Brauchwasser-Wärmetauscher (3) von dem Heizungsvorlauf (5) kein Ventil angeordnet ist.

3. Vorrichtung nach einem der vorherigen Ansprüche, **dadurch gekennzeichnet,** daß in Strömungsrichtung hinter beiden Pumpen (7, 11) je ein Rückschlagventil (12, 13) angeordnet ist, die ein Durchströmen der Pumpen (7, 11) entgegen der Pumprichtung bei stillstehender Pumpe verhindern.

4. Vorrichtung nach einem der vorherigen Ansprüche, **dadurch gekennzeichnet,** daß beide Pumpen (7, 11) dicht nebeneinander angeordnet sind und beide Pumpenauslässe an ein Wechselventil (24-29) angeschlossen sind, dessen zwei durch das Ventilglied (27) verschließbare Einlässe Öffnungen jeweils mit einem Pumpenauslaß verbunden sind oder diese bilden und dessen Auslaß (29) mit dem Rücklauf (8) der Wärmequelle (1) verbunden ist.

5. Vorrichtung nach einem der vorherigen Ansprüche, **dadurch gekennzeichnet,** daß in der länglichen Ventilkammer (26) eine Kugel (27) als Ventilstellglied von dem einen Platten- und/oder Pumpenauslaß (18) zum anderen Platten- und/oder Pumpenauslaß (18) beweglich ist.

6. Vorrichtung nach Anspruch 5, **dadurch gekennzeichnet,** daß die Pumpenauslaßränder die Sitze für die Kugel (27) bilden.

7. Vorrichtung nach einem der vorherigen Ansprüche, **dadurch gekennzeichnet,** daß die Ventilkammer (26) auf der den Pumpen (7, 11) abgewandten Innenseite für die Ventilkugel (27) zueinander parallele Führungsschultern (28) bilden, deren Abstand geringer ist als der Kugeldurchmesser und zwischen denen der Ventilauslaß (29) abzweigt.

## Claims

1. An apparatus for a hot water heating installation having a heat source (1), more particularly a boiler or a gas heating apparatus, by which a liquid, more particularly water, is heated and supplied via a heating circuit (5, 6) having a pump (7) to heat consumers (2), more particularly heating elements, and a heat exchanger (3) which heats the domestic water and whose supply pipe (9) branches off from the heating outflow (5) and whose return (10) discharges into the return (8) of the heat source (1), a second pump (11) being disposed in a hot water circuit in a domestic water heat exchanger (3), and the pumps (7, 11) being electrically switchable, more particularly controllable for controlling the heating circuit (2, 5, 6) and the hot water circuit (3, 9, 10), **characterized in that**:

– each pump casing (14) has on the side remote from the pump motor a flat side (16) having an inlet (17) more particularly coaxial with the impeller and an outlet (18) laterally offset in relation thereto; the pumps (7, 11) are attached to one side of a flat plate (20), more particularly of sheet metal; and the plate (20) is formed with openings (21, 27) corresponding to the inlets (17) and outlets (18);

– the inlet openings (21) in the plates extending to the pump inlets (17) form or bear connecting spigots (22) on the plate side adjacent the pumps (7, 11), and

– the two pump outlets (18) and/or outlet openings (23) extending to the pump outlets (18) are covered on the side of the plate remote from the pumps (7, 11) by the casing (25) of a changeover valve (24-29) whose valve chamber (26) on the side adjacent the pumps (7, 11) forms an opening (24) which has a flat edge and which bears sealing-tight against the plate (20) and encloses the two pump outlets (18).

2. An apparatus according to claim 1, **characterized in that** no valve is provided at the place where the supply pipe (9) to the domestic water heat exchanger (3) branches off from the heating outflow (5).

3. An apparatus according to one of the preceding claims, **characterized in that** a non-return valve (12, 13) is disposed downstream of the two pumps (7, 11) in the direction of flow, to prevent water from flowing through the pumps (7, 11) contrary to the pumping direction when the pump is stationary.

4. An apparatus according to one of the preceding claims, **characterized in that** the two pumps (7, 11) are disposed close one beside the other and the two pump outlets are connected to a changeover valve (24-29) whose two inlets, which can be closed by the valve member (27), are each connected to or form a pump outlet, and whose outlet (29) is connected to the return (8) of the heat source (1).

5. An apparatus according to one of the preceding claims, **characterized in that** disposed in the elongate valve chamber (26) is a ball (27) which can move as a valve adjusting member from one plate outlet and/or pump outlet (18) to the other plate outlet and/or pump outlet (18).

6. An apparatus according to claim 5, **characterized in that** the pump outlet edges form the seats for the wall (27).

7. An apparatus according to one of the preceding claims, **characterized in that** the valve chamber (27) on the inner side remote from the pumps (7, 11) forms parallel guide shoulders (28) for the valve ball (27) whose distance apart is smaller than the ball diameter and between which the valve outlet (29) branches off.

## Revendications

1. Dispositif pour une installation de chauffage à eau chaude avec une source de chaleur (1), en particulier une chaudière ou un appareil de chauffage au gaz, par lequel un liquide, en particulier de l'eau, est chauffé et est amené, par l'intermédiaire d'un circuit de chauffage (5, 6) présentant une pompe (7) aux consommateurs de chaleur, en particulier des radiateurs et avec un échangeur de chaleur (3) réchauffant l'eau sanitaire, dont la conduite d'alimentation (9) dérive de l'aller de chauffage (5) et dont le retour (10) débouche dans le retour (8) de la source de chaleur (1), une seconde pompe (11) étant disposée dans le circuit d'eau chaude présentant l'échangeur de chaleur d'eau sanitaire (3), et les pompes (7, 11) pouvant être commutées, en particulier commandées, électriquement pour la commande du circuit de chauffage (2, 5, 6) et du circuit d'eau chaude (3 9, 10), **caractérisé en ce que**
   – chaque carter de pompe (14) présente sur la face opposée au moteur de pompe une face plane (16) qui a une entrée (17), en particulier coaxiale au rotor et une sortie (18) décalée latéralement par rapport à elle, et que les pompes (7, 11) sont fixées sur une face d'une plaque (20) plane, en particulier une tôle, et que la plaque (20) possède des ouvertures (21, 23) coïncidant avec les entrées et les sorties (17, 18),
   – les ouvertures d'entrée (21) de la plaque conduisant aux entrées (17) de pompe forment ou portent des raccords (22) sur la face de la plaque tournée vers les pompes (7, 11), et
   – les deux sorties (18) des pompes et/ou des ouvertures de sortie (23) de la plaque conduisant aux sorties (18) des pompes sont recouvertes, sur la face de la plaque opposée aux pompes (7, 11), par le carter (25) d'une soupape à deux voies (24 - 29) dont la chambre de soupape (26) forme sur la face tournée vers les pompes (7, 11) une ouverture (24) à bord plan qui est étroitement adjacente à la plaque (20) et entoure les deux sorties (18) des pompes.

2. Dispositif selon la revendication 1, **caractérisé en ce qu'**aucune soupape n'est disposée à l'emplacement de dérivation de la conduite d'alimentation (9) à l'échangeur de chaleur d'eau sanitaire (3) de l'aller de chauffage (5).

3. Dispositif selon l'une des revendications précédentes, **caractérisé en ce qu'**une soupape de retenue (12, 13) est disposée derrière chacune des deux pompes (7, 11) dans la direction d'écoulement et empêche le passage à travers les deux pompes (7, 11) en sens contraire de la direction de pompe lorsque la pompe est à l'arrêt.

4. Dispositif selon l'une des revendications précédentes, **caractérisé en ce que** les deux pompes (7, 11) sont disposées étroitement près l'une de l'autre et les deux sorties des pompes sont raccordées à une soupape à deux voies (24 - 29) dont les deux ouvertures d'entrée pouvant être fermées par l'organe de soupape (27) sont reliées respectivement à une sortie de pompe ou forment celle-ci et dont la sortie (29) est raccordée au retour (8) de la source de chaleur (1).

5. Dispositif selon l'une des revendications précédentes, **caractérisé en ce qu'**une bille (27) est mobile dans la chambre de soupape (26) longitudinale en tant qu'organe de soupape entre l'une des sorties (18) de plaque et/ou de pompe et l'autre sortie (18) de plaque et/ou de pompe.

6. Dispositif selon la revendication 5, **caractérisé en ce que** les bords des sorties des pompes forment les sièges pour la bille (27).

7. Dispositif selon l'une des revendications précédentes, **caractérisé en ce que** la chambre de soupape (26) forme sur la face interne opposée aux pompes (7, 11) des épaulements de guidage (28) pour la bille de soupape (27) parallèles entre eux et dont l'écartement est inférieur au diamètre de la bille, et entre lesquels la sortie de soupape (29) diverge.

Fig. 1

Fig. 2

Fig. 3